# EUROPÄISCHE PATENTANMELDUNG

(11) **EP 3 121 930 A1**
(43) Veröffentlichungstag der Anmeldung: **25.01.2017**
(21) Anmeldenummer: 16176124.2
(22) Anmeldetag: 24.06.2016
(51) Int. Cl.: H02J 13/00, H01R 31/06

(54) **VORRICHTUNG ZUR DETEKTION EINES MIT EINEM STECKDOSENEINSATZ EINER INTELLIGENTEN STECKDOSE VERBUNDENEN ELEKTRISCHEN GERÄTES**

(30) Priorität: 24.07.2015 DE 102015009361
(71) Anmelder: ABB AG, 68309 Mannheim (DE)
(72) Erfinder: Schmitt, Johannes, 68526 Ladenburg (DE); Zhibo, Pang, 72242 Västeras (SE); Johansson, Morgan, 72244 Västeras (SE)

(57) **Zusammenfassung**

Die Erfindung betrifft eine Vorrichtung zur automatischen Detektion eines mit einer intelligenten Steckdose (20) verbundenen elektrischen Gerätes umfassend einen in der Steckdose (20) angeordneten Steckdoseneinsatz (21) zur Aufnahme eines Steckers (30) des elektrischen Gerätes, eine elektrische Verbindung (10) der Steckdose (20) zu einem elektrischen Versorgungsnetz, einem Schaltelement (23), über welches sich das mit dem Steckdoseneinsatz (21) verbundene elektrische Gerät ein- bzw. ausschalten lässt und ein in der Steckdose (20) integriertes Kommunikationsmodul (24), dass mit einer entfernten Datenverarbeitungseinrichtung über eine weitere Verbindung (40) zusammenwirkt. Der Stecker (30) des in den Steckdoseneinsatz (21) einzusteckenden elektrischen Gerätes ist mit einem Funketikett (31) ausgestattet, auf dem Daten betreffend den Gerätetyp des mit der intelligenten Steckdose (20) zu verbindenden elektrischen Gerätes gespeichert sind. Die intelligente Steckdose (20) ist mit einem Lesegerät (22) versehen, welches die Kommunikation zwischen dem Funketikett (31) und dem Lesegerät (22) bei eingestecktem Stecker (30) dahingehend ermöglicht, dass das Lesegerät (22) ein Signal mit aufmodellierten Daten bezüglich dem Gerätetyp des in die Steckdose (20) eingestecktem elektrischen Gerätes von dessen Funketikett (31) kontaktlos erfasst und zu einer entfernten Datenverarbeitungseinrichtung überträgt.

## Beschreibung

Die Erfindung bezieht sich auf eine Vorrichtung zur automatischen Detektion eines mit einem Steckdoseneinsatz verbundenen elektrischen Gerätes gemäß dem Oberbegriff des Anspruchs 1.

Aus dem Stand der Technik sind intelligente Steckdosen, auch "smart socket" genannt, bekannt, die üblicherweise als mobiler Steckdoseneinsatz oder Zwischenstecker zwischen einem elektrischen Versorgungsnetz, vorzugsweise einem 220V Wechselspannungsnetz, und einem elektrischen Gerät, dessen Stecker mit dem Steckdosentopf des Zwischensteckers verbunden ist, verwendet werden.

Diese intelligenten Steckdosen sind typischerweise mit einem als Mikrocontroller oder Prozessor ausgeführtem Schaltelement und einer Datenübertragungseinheit, auch Kommunikationsmodul genannt, ausgestattet. Über das Schaltelement lässt sich das an die Steckdose angeschlossene elektrische Gerät ein- bzw. ausschalten. In einigen Ausführungsformen ist der Prozessor oder Controller auch dafür vorgesehen, die elektrische Leistung zu bestimmen, die welche das angeschlossene Gerät verbraucht.

Die Kenntnis, welches Gerät bzw. welcher Gerätetyp sich im Steckdoseneinsatz befinden ist erforderlich, um die geeignete Steuerlogik für das Gerät anzuwenden und gegebenenfalls auch anzuzeigen.

Dazu wird der Gerätetyp manuell, beispielsweise aus einer bereitgestellten Liste, ausgewählt und an der jeweiligen Steckdose eingestellt.

Ein weiterer Ansatz zur Einstellung des Gerätetyps beruht darauf, dass die in der intelligenten Steckdose integrierte Datenübertragungseinheit die Informationen zum Energieverbrauch zu einer externen Datenverarbeitungseinrichtung übermittelt. Daraus wird die Charakteristik des jeweiligen der Energieverbrauches des eingesteckten Gerätes auf mit der intelligenten Steckdose verbundenen Datenverarbeitungseinrichtungen verarbeitet und genutzt, um daraus auf den Gerätetyp des eingesteckten Gerätes zu schließen.

Allerdings sind die vorab beschriebenen Vorgehensweisen fehleranfällig bzw. erfordern einen zusätzlichen Hardware- bzw. Softwareaufwand.

Ausgehend von diesem Stand der Technik ist es daher Aufgabe der Erfindung eine Vorrichtung zu schaffen, deren intelligente Steckdose eine automatisierte Detektion eines vom Steckdoseneinsatz der Steckdose aufgenommenen elektrischen Gerätes, insbesondere seines Gerätetyps, in einfacher Weise ermöglicht.

Diese Aufgabe wird erfindungsgemäß mit einer Vorrichtung zur automatisierten Detektion eines mit einem Steckdoseneinsatz verbundenen elektrischen Gerätes mit den in Anspruch 1 angegebenen Merkmalen gelöst. Vorteilhafte Ausgestaltungen, Verbesserungen der erfindungsgemäßen Vorrichtung sind in weiteren Ansprüchen und in der folgenden Beschreibung angegeben.

Die erfindungsgemäße Vorrichtung zur automatischen Detektion eines mit einer intelligenten Steckdose verbundenen elektrischen Gerätes umfasst einen in der Steckdose angeordneten Steckdoseneinsatz zur Aufnahme eines Steckers des elektrischen Gerätes, eine elektrische Verbindung der Steckdose zu einem elektrischen Versorgungsnetz, beispielsweise einem 220V Wechselspannungsnetz, ein Schaltelement, über welches sich das mit dem Steckdoseneinsatz verbundene elektrische Gerät ein- bzw. ausschalten lässt und ein in der Steckdose integriertes Kommunikationsmodul, dass mit einer entfernten bzw. zentralen Datenverarbeitungseinrichtung, drahtlos oder über einen Gebäudebus mittels einer weiteren Verbindung zusammenwirkt.

Der Steckdoseneinsatz der erfindungsgemäßen Vorrichtung kann als Zwischenstecker oder im Unterputzeinsatz als ein in einer Zentralscheibe integrierter Steckdosentopf ausgeführt sein, wobei bei dieser Ausführungsform der Steckdosentopf mittels eines Abdeckrahmens abgedeckt sein kann. Alternativ kann der Steckdoseneinsatz in einer Aufputzdose untergebracht sein.

Erfindungsgemäß ist der Stecker des in den Steckdoseneinsatz einzusteckenden elektrischen Gerätes mit einem, beispielsweise als RFID-Tag oder NFC-Tag ausgeführtem Funketikett, ausgestattet, auf dem Daten betreffend den Gerätetyp des mit der intelligenten Steckdose zu verbindenden elektrischen Gerätes gespeichert sind.

Erfindungsgemäß ist die intelligente Steckdose mit einem Lesegerät, vorzugsweise einem NFC Tag Reader versehen, welcher die Kommunikation zwischen dem Funketikett und dem Lesegerät bei eingestecktem Stecker dahingehend ermöglicht, dass das Lesegerät ein Signal mit aufmodellierten Daten, beispielsweise eine eindeutige ID- Nummer des in den Steckdoseneinsatz eingesteckten Gerätes und/oder Datenpakete betreffend das eingesteckte Gerät, vom Funketikett erfasst.

Über die vorgesehene weitere Verbindung zwischen dem Lesegerät und der zentralen Datenverarbeitungseinrichtung, die ein PC, ein mobiles Endgerät, wie ein Smartphone, oder ein Tablet- PC oder auch eine Zentrale eines Gebäudeautomatisierungssystems sein kann, stehen die auf dem Funketikett gespeicherten Daten betreffend den Gerätetyp des mit der intelligenten Steckdose verbundenen elektrischen Gerätes der Datenverarbeitungseinrichtung zur weiteren Verarbeitung zur Verfügung.

In einer Ausgestaltung der erfindungsgemäßen Vorrichtung ist die intelligente Steckdose dafür eingerichtet, Informationen zum Energieverbrauch des angeschlossenen elektrischen Gerätes über das Kommunikationsmodul zur entfernten zentralen Datenverarbeitungseinrichtung zu übermitteln.

Auch kann die intelligente Steckdose der erfindungsgemäßen Vorrichtung als Stromüberwachungssteckdose ausgebildet sein und die Stromaufnahme und den aktuellen Zustand des angeschlossenen elektrischen Gerätes ermitteln und zur weiteren Verarbeitung, beispielsweise der Datenverarbeitungseinrichtung, bereitstellen.

Sind die Funketiketten als aktive NFC- oder RFID-Tags ausgeführt, können die darauf gespeicherten Informationen bzw. Daten, beispielsweise mittels eines mit der intelligenten Steckdose verbundenen Host- Gerätes nicht nur gelesen sondern auch verändert bzw. ergänzt werden. Aktive Funketiketten, die auf den Steckern der Geräte angeordnet sind, können Informationen, wie beispielsweise den Systemstatus und die Stellwerte des angesteckten Endgerätes bereitstellen. Ein Beispiel dafür ist die die aktuelle Innentemperatur eines Kühlschrankes, sowie die gewählte Zieltemperatur dieses Gerätes. Das Schreiben der aktiven Funketiketten kann dazu verwendet werden Informationen auf das eingesteckte Gerät zu übertragen, beispielsweise bezüglich der Steuerung der Zieltemperatur des Kühlschrankes.

Die mit der Erfindung erzielbaren Vorteile beruhen darauf, dass der Gerätetyp des eingesteckten Gerätes über das auf dem Stecker befindliche Funketikett sicher und zuverlässig erkannt wird. Dabei müssen keine manuellen Handlungen, wie die Auswahl und Zuordnung des Gerätetyps aus einer Tabelle erfolgen oder Charakteristiken des jeweiligen Energieverbrauches des in der Steckdose eingesteckten Gerätes, beispielsweise auf der damit verbundenen Datenverarbeitungseinrichtungen, ausgewertet werden.

Weiterhin sind die von den Funketiketten abrufbaren Daten von dem, vorzugsweise als Mikrocontroller oder Prozessor ausgeführtem Schaltelement, das auch die Ein- bzw. Ausschaltfunktion für das an die Steckdose angeschlossene Gerät steuert, verarbeitbar. Auch können diese Daten zur Kommunikation mit weiteren Baugruppen und Komponenten des Gebäudeautomatisierungssystems genutzt werden. Ein Beispiel hierfür ist ein System, welche die Energieproduktion einer Photovoltaik-Anlage im Zusammenspiel mit Verbrauchern zur Optimierung des Eigenverbrauchanteils regelt. Hierzu zählen typischerweise Verbraucher mit hohem Energieverbrauch, der Möglichkeit (zumeist thermische) Energie zu speichern, sowie der Möglichkeit der Lastverschiebung, wie Klimaanlagen, Kühlschränke, Heizungspumpen oder Waschmaschinen.

In einer vorteilhaften Ausgestaltung kann die Steuerlogik des Controllers auch ausgelagert sein und, beispielsweise aus einer mit der Steckdose verbundenen Cloud, einem Gateway, einem externen Controller oder Server, ausführbar sein. Dabei können Einstellungen dort oder über eine API mittels eines mobilen Endgerätes, beispielsweise einem Smartphone oder einem Tablet- PC vorgenommen werden.

Dadurch, dass eine zuverlässige und damit fehlerfreie automatische Bestimmung des Gerätetyps des mit der intelligenten Steckdose verbundenen Gerätes erreicht wird, ist bei einem Austausch des Gerätes eine neue automatische Identifizierung über das auf dem Stecker befindliche Funketikett des neu in die Steckdose eingesteckten in einfacher Weise gewährleistet.

Die erfindungsgemäße Vorrichtung erlaubt somit eine kostengünstige Detektion des Gerätetyps eines in eine intelligente Steckdose eingesteckten Verbrauchers, ohne dass irgendwelche manuelle Interaktionen erforderlich sind.

Stecker ohne Funketikett können mit geringem finanziellem Aufwand mit einem NFC-Aufkleber bzw. RFID-Tag nachgerüstet und integriert werden.

Auch eine Kommunikation der in den intelligenten Steckdosen eines Gebäudekommunikationssystems eingesteckten Geräte untereinander unter Nutzung der auf den Funketiketten gespeicherten Informationen, beispielsweise über ein, beispielsweise als Gebäudebus ausgeführtes Bussystem, ist möglich.

Dazu überträgt das Kommunikationsmodul der jeweiligen intelligenten Steckdose das Signal mit den Daten, beispielsweise bezüglich dem Gerätetyp des in die Steckdose eingestecktem elektrischen Gerätes, von dessen Funketikett über das Bussystem entweder direkt an die Geräte des Gebäudeautomatisierungssystems oder an die entfernte Datenverarbeitungseinrichtung.

Die Erfindung wird nachstehend anhand des in der Zeichnung dargestellten Ausführungsbeispiels erläutert. Es zeigt:

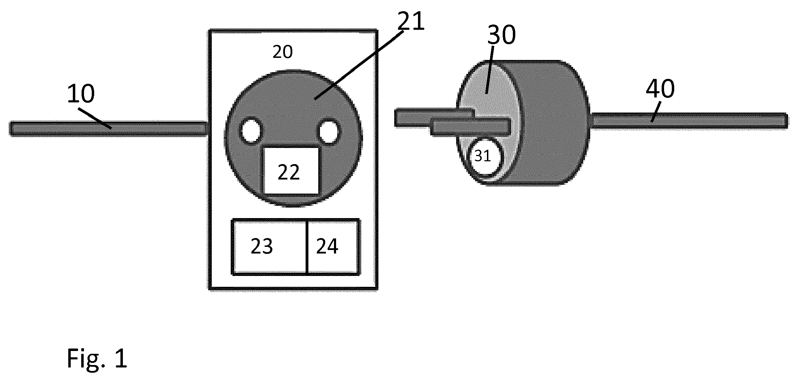

- Fig. 1: ein beispielhaftes Ausführungsbeispiel der erfindungsgemäßen Vorrichtung.

In der Figur 1 ist ein Ausführungsbeispiel der erfindungsgemäßen Vorrichtung zur automatischen Detektion eines mit einer intelligenten Steckdose 20 verbundenen elektrischen Gerätes gezeigt. Ein in der Steckdose 20 angeordneter Steckdoseneinsatz 21 dient zur Aufnahme des Steckers 30 eines elektrischen Gerätes. Die Steckdose 20 ist über eine elektrische Verbindung 10 mit einen 220V Wechselspannungsnetz verbunden und mit einem Controller 23 ausgestattet, der dazu dient das mit dem Steckdoseneinsatz 21 verbundene elektrische Gerät über sein integriertes Schaltelement ein- bzw. auszuschalten. Das Schaltelement 23 wirkt dabei mit einer im Controller 23 der Steckdose 20 integrierten Steuerelektronik zusammen und kann auch fernbedienbar sein, beispielsweise über ein Smartphone, eine Fernbedienungseinheit oder einen Tablet-PC. Auch kann vorgesehen sein das Schaltelement 23 von einer Zentrale eines Gebäudeautomatisierungssystems über einen mit der Steckdose 20 verbundenen Bus zu bedienen.

Dazu befindet sich in der intelligenten Steckdose 20 ein Kommunikationsmodul 24, dass mit dem Smartphone, der Fernbedienungseinheit, dem Tablet-PC und/oder der Zentrale des Gebäudeautomatisierungssystems drahtgebunden oder drahtlos verbunden ist und optional auch Informationen zum Energieverbrauch des in der Steckdose befindlichen elektrischen Gerätes mittels eines integriertem Energieerfassungssensors erfasst und zu diesen Datenverarbeitungseinrichtungen übermitteln kann.

Erfindungsgemäß ist der Stecker 30 des in den Steckdoseneinsatz 21 einzusteckenden elektrischen Gerätes mit einem NFC-Tag 31 ausgestattet, das für eine drahtlose Nahfeldkommunikation (Near Field Communication) mit einem entsprechendem Lesegerät 22 zum kontaktlosen Austausch von Daten per Funktechnik über kurze Strecken von wenigen Zentimetern vorgesehen ist.

Auf dem NFC-Tag 31 sind Daten betreffend den Gerätetyp des mit der intelligenten Steckdose 20 verbundenen elektrischen Gerätes als eindeutige ID- Nummer und/oder als Datenpakete, sogenannte Payloads, die weiteren Text, Zeichen und Bilder bezüglich dem Gerätetyp enthalten können, gespeichert. Sind die Funketikette als aktive NFC-Tags ausgeführt, lassen sich auf ihnen auch Parameter, wie beispielsweise Systemzustände und/oder Stellwerte, der elektrischen Geräte speichern.

Die intelligente Steckdose 20 ist mit einem als NFC- Tag Reader 22 ausgeführtem Lesegerät 22 versehen, das die Kommunikation zwischen dem NFC-Tag 31 und der intelligenten Steckdose 20 bei eingestecktem Stecker 30 dahingehend ermöglicht, dass das Lesegerät 22 ein Signal mit den aufmodellierten Daten, die auf dem vom NFC-Tag 31 gespeichert sind, automatisch erfasst.

Über eine vorgesehene weitere, vorzugsweise drahtlose, Verbindung 40 zwischen dem mit dem Lesegerät 22 verbundenen Kommunikationsmodul 24 und der zentralen Datenverarbeitungseinrichtung, die ein Smartphone, ein PC, ein Tablet PC oder die Zentrale eines Gebäudeautomatisierungssystems sein kann, sind die auf dem NFC-Tag 31 gespeicherten Daten und/oder Datenpakete ebenfalls übertragbar.

### Bezugszeichenliste:

- 10: elektrische Verbindung zu einem Versorgungsnetz, 220V Wechselspannungsnetz
- 20: intelligente Steckdose, Smart Socket, Zwischenstecker
- 21: Steckdoseneinsatz
- 22: Lesegerät, Tag Reader
- 23: Schaltelement, Controller, Prozessor
- 24: Kommunikationsmodul, Datenübertragungseinheit
- 30: Stecker eines elektrischen Gerätes
- 31: Funketikett, RFID-Tag, NFC-Tag
- 40: weitere elektrische Verbindung des an die Steckdose angeschlossenen elektrischen Gerätes

## Patentansprüche

1. Vorrichtung zur automatischen Detektion eines mit einer intelligenten Steckdose (20) verbundenen elektrischen Gerätes umfassend einen in der Steckdose (20) angeordneten Steckdoseneinsatz (21) zur Aufnahme eines Steckers (30) des elektrischen Gerätes, eine elektrische Verbindung (10) der Steckdose (20) zu einem elektrischen Versorgungsnetz, wenigstens ein Schaltelement (23), über welches sich das mit dem Steckdoseneinsatz (21) verbundene elektrische Gerät ein- bzw. ausschalten lässt und ein in der Steckdose (20) integriertes Kommunikationsmodul (24), dass mit einer entfernten Datenverarbeitungseinrichtung über eine weitere Verbindung (40) zusammenwirkt, **dadurch gekennzeichnet dass**
- der Stecker (30) des in den Steckdoseneinsatz (21) einzusteckenden elektrischen Gerätes mit einem Funketikett (31) ausgestattet ist, auf dem Daten betreffend den Gerätetyp des mit der intelligenten Steckdose zu verbindenden elektrischen Gerätes gespeichert sind, und
- die intelligente Steckdose (20) mit einem Lesegerät (22) versehen ist, welches die Kommunikation zwischen dem Funketikett (31) und dem Lesegerät (22) bei eingestecktem Stecker (30) dahingehend ermöglicht, dass das Lesegerät (22) ein Signal mit aufmodellierten Daten bezüglich dem Gerätetyp des in die Steckdose (20) eingestecktem elektrischen Gerätes von dessen Funketikett (31) kontaktlos erfasst und zu einer entfernten Datenverarbeitungseinrichtung überträgt.

2. Vorrichtung nach Anspruch 1, **dadurch gekennzeichnet, dass** die weitere Verbindung (40) als drahtlose Verbindung zwischen dem Lesegerät (22) und der als mobiles Endgerät ausgeführten entfernten zentralen Datenverarbeitungseinrichtung ausgebildet ist.

3. Vorrichtung nach Anspruch 1, **dadurch gekennzeichnet, dass** die weitere Verbindung (40) als drahtgebundene Verbindung zwischen dem Lesegerät (22) und der als Zentrale eines Gebäudeautomatisierungssystems ausgeführten entfernten zentralen Datenverarbeitungseinrichtung ausgebildet ist.

4. Vorrichtung nach einem der vorstehenden Ansprüche, **dadurch gekennzeichnet, dass** die auf dem Funketikett (31) gespeicherten Daten und zum Lesegerät (22) sowie zur entfernten zentralen Datenverarbeitungseinrichtung übertragenen Daten eine eindeutige ID- Nummer des in den Steckdoseneinsatz (21) eingesteckten Gerätes und/oder Datenpakete betreffend das eingesteckte Gerät sind.

5. Vorrichtung nach einem der vorstehenden Ansprüche, **dadurch gekennzeichnet, dass** das die intelligente Steckdose (20) über das Kommunikationsmodul Informationen zum Energieverbrauch des angeschlossenen elektrischen Gerätes zur entfernten zentralen Datenverarbeitungseinrichtung übermittelt.

6. Vorrichtung nach Anspruch 5, **dadurch gekennzeichnet, dass** die Steckdose (20) als Stromüberwachungssteckdose ausgebildet ist, die Stromaufnahme und den aktuellen Zustand des angeschlossenen elektrischen Gerätes ermittelt und zur weiteren Verarbeitung, beispielsweise der entfernten Datenverarbeitungseinrichtung, bereitstellt.

7. Vorrichtung nach einem der vorstehenden Ansprüche, **dadurch gekennzeichnet, dass** das Funketikett (31) ein RFID-Tag oder NFC-Tag ist.

8. Vorrichtung nach einem der vorstehenden Ansprüche, **dadurch gekennzeichnet, dass** die Funketikette als aktive Funketikette ausgeführt sind und die darauf gespeicherten Informationen mittels eines mit der intelligenten Steckdose verbundenen Host- Gerätes lesbar, veränderbar und ergänzbar sind.

9. Vorrichtung nach einem der vorstehenden Ansprüche, **dadurch gekennzeichnet, dass** die Funketikette als aktive Funketikette ausgeführt sind, auf denen Parameter, wie Systemzustände und/oder Stellwerte der elektrischen Geräte gespeichert sind.

10. Vorrichtung nach einem der vorstehenden Ansprüche, **dadurch gekennzeichnet, dass** das Lesegerät (22) ein NFC Tag Reader ist.

11. Vorrichtung nach einem der vorstehenden Ansprüche, **dadurch gekennzeichnet, dass** das Schaltelement (23) fernbedienbar ist.

12. Vorrichtung nach einem der vorstehenden Ansprüche, **dadurch gekennzeichnet, dass** das Schaltelement (23) mit einer in einem Controller (23) der Steckdose (20) integrierten Steuerelektronik zusammenwirkt.

13. Vorrichtung nach einem der vorstehenden Ansprüche, **dadurch gekennzeichnet, dass** der Steckdoseneinsatz (21) als Zwischenstecker oder im Unterputzeinsatz als ein in einer Zentralscheibe integrierter Steckdosentopf ausgeführt ist.

14. Vorrichtung nach einem der vorstehenden Ansprüche, **dadurch gekennzeichnet, dass** das Kommunikationsmodul (24) das Signal mit den Daten bezüglich dem Gerätetyp des in die Steckdose (20) eingestecktem elektrischen Gerätes von dessen Funketikett (31) über einen Gebäudebus an die Datenverarbeitungseinrichtung überträgt.
